(19) Europäisches Patentamt
European Patent Office
Office européen des brevets

(11) Publication number : **0 492 824 A2**

(12) # EUROPEAN PATENT APPLICATION

(21) Application number : **91311191.0**

(51) Int. Cl.$^5$ : **C08G 18/10,** C08G 18/42

(22) Date of filing : **02.12.91**

(30) Priority : **21.12.90 US 633104**

(43) Date of publication of application :
**01.07.92 Bulletin 92/27**

(84) Designated Contracting States :
**DE FR GB IT SE**

(71) Applicant : **MINNESOTA MINING AND MANUFACTURING COMPANY**
**3M Center, P.O. Box 33427**
**St. Paul, Minnesota 55133-3427 (US)**

(72) Inventor : **Tangen, John C., c/o Minnesota Mining and**
**Manufact. Co., 2501 Hudson Road, P.O. Box 33427**
**St. Paul, Minnesota 55133-3427 (US)**
Inventor : **Stobbie, Charles W., IV, c/o Minnesota Mining and**
**Manufact. Co., 2501 Hudson Road, P.O. Box 33427**
**St. Paul, Minnesota 55133-3427 (US)**
Inventor : **Kangas, Lani S., c/o Minnesota Mining and**
**Manufact. Co., 2501 Hudson Road, P.O. Box 33427**
**St. Paul, Minnesota 55133-3427 (US)**

(74) Representative : **Baillie, Iain Cameron et al**
**Ladas & Parry Altheimer Eck 2**
**W-8000 München 2 (DE)**

(54) **Mixture of isocyanate-terminated polyurethane prepolymers having reduced set time.**

(57) Blends of hydroxy-functional polymers such as linear polyester polyols, linear and non-linear polyester polyols, or poly-ε-caprolactone and a linear polyester polyol. Addition of small amounts of one polymer to a another polymer greatly reduces the set time of the other polymer.

EP 0 492 824 A2

Jouve, 18, rue Saint-Denis, 75001 PARIS

## BACKGROUND OF THE INVENTION

### Field of the Invention

This invention relates to mixtures of isocyanate-terminated polyurethane prepolymers having reduced set time and to the use of such mixtures as hot melt adhesives, coatings and/or sealants.

### Description of the Related Art

Isocyanate-terminated, polyurethane prepolymers (sometimes referred to hereinafter as "polyurethane prepolymers" or "prepolymers") are desirable in a variety of applications. For example, they can be used in reactive hot melt urethane adhesive, coating and/or sealant systems. Such hot melt urethane systems are solid at room temperature, melt to a viscous liquid when heated to moderate temperatures (e.g., 82-121°C), and are applied in a molten state to an appropriate substrate. The liquid cools and solidifies to provide an initial bond strength (that is, "green strength") and eventually combines with ambient moisture in a curing reaction that provides the final or ultimate bond strength.

Hot melt adhesives offer several desirable features including rapid bond formation, few physiological hazards, environmental acceptability (non-polluting), and the formation of degradation resistant bonds. Different hot melt systems can be compared with reference to certain characteristics or parameters such as set time (green strength), open time, ultimate bond strength, adhesion to various substrates, viscosity, temperature resistance, and the like. Of course, those parameters which are most important will depend on the application for which the adhesive system is intended.

In certain applications, the "set time" or "green strength" of the adhesive composition is of particular importance. Set time as used herein and as described more fully below refers to the time required for an adhesive to "set" or to no longer permit "repositionability" once the adhesive has been applied to a substrate. In a typical adhesive bonding operation, an adhesive is applied to a substrate and a second member is placed on the substrate to be bonded thereto by the adhesive. For a certain period of time after the adhesive has been applied, the second member can be moved, adjusted or repositioned until it is appropriately located relative to the substrate. Once that period of time (the set time) elapses, the second member can no longer be repositioned relative to the substrate.

Green strength is often synonymous with set time and as used herein is a measure of the initial strength of the adhesive bond immediately or shortly after the adhesive has been applied to the substrate.

Set time and green strength are to be distinguished from a related parameter, open time. Open time refers to the maximum time during which the second member can be bonded to the substrate after the adhesive has been applied to the substrate in order to form a useful bond. The open time of an adhesive is typically longer than its set time. The ultimate strength of the adhesive cannot be less than the green strength.

In certain instances it is particularly desirable to employ an adhesive formulation with a short set time; that is, an adhesive which quickly loses its capacity for repositionability and which rapidly achieves its initial bond strength (green strength). An example of such a situation is an automated production or assembly line. For instance, on an automated production line for motor vehicle lamp assemblies, the lenses for the vehicle side lights, tail lights and the like are typically adhesively bonded to the lamp housings. The adhesive is applied to the lamp housing (the substrate), and the lens (the second member) is bonded to the housing. The adhesive possesses a certain set time (for example, 30 seconds) so that the lens can be manually adjusted and repositioned if it was not accurately mounted when first applied.

However, once the lens is properly located, it is desirable for the adhesive to set and solidify as rapidly as possible. Until the adhesive set time is exceeded, the lens may be inadvertently jarred free and fall off the lamp housing as the lamp assembly progresses along the production line unless the components are clamped or otherwise secured together.

Current production methods allow for accurate placement of the lens on the lamp housing. Consequently, it is desirable to have an adhesive with a relatively short set time so that the speed of the assembly line and hence the number of completed units can be increased.

Of course, how rapidly an adhesive should set depends on the particular situation. For example, in the assembly of complicated or precision articles it may be advantageous to have a relatively longer set time so as to allow more time during which the individual components can be repositioned. However, it is generally true that once the second member has been accurately positioned on the substrate, it is desirable to have the adhesive reach its set time as quickly as possible.

A number of reactive urethane hot melt compositions are known. For example, U.S. Patent No. 3,931,077 discloses a reactive hot melt composition comprising: (a) 20-73 wt. % of a urethane prepolymer prepared from

a diol selected from ethylene glycol, propylene glycol, 1,4-butanediol, 1,4-butinediol [sic], polymers thereof, and polytetramethylene glycolether [sic]; (b) 2-25 wt. % of a thermoplastic resin of an ethylene-vinyl copolymer, an ethylene-acrylic acid copolymer, an ethylene-acrylate copolymer, an atactic polypropylene or a poly(ethylene terephthalate) linear polymer; and (c) 25-55 wt. % of a tackifier. It is stated that the tackifiers impart high cohesive force at temperatures below 60°C and high instant adhesive strength. It is also stated that these compositions have a long pot-life and good application temperature characteristics.

U.S. Patent No. 4,352,858 discloses a modified polyurethane adhesive composition comprising an isocyanate-terminated prepolymer and a dicarbamate ester which is compatible with the prepolymer and which contains two free isocyanate groups. It is stated that the dicarbamate coreacts with the prepolymers and becomes part of the cured polymeric matrix, thereby contributing to the properties of the cured prepolymer.

British Patent No. 2,137,638 discloses a urethane hot melt adhesive composition which comprises a moisture-curable polyurethane formed from a diisocyanate, a substantially linear hydroxy polyester, and a monofunctional reactant present in an amount sufficient to react with up to 40 mole percent of the isocyanate groups of the product of the prepolymer reaction. Supposedly this provides a coating composition which is susceptible to moisture but which does not degrade during storage of a coated substrate. That is, the coating is no longer heat softenable.

U.S. Patent No. 4,585,819 discloses a polyurethane hot melt composition which comprises 50-80% by wt. of an isocyanate prepolymer, up to 75% by wt. of a thermoplastic polyurethane or polyester, and/or a low molecular weight synthetic resin selected from the group consisting of ketone resins, hydrogenation products of acetophenone condensation resins, and mixtures thereof. The resin is stated to improve the hot tack, wetting capacity, and binding velocity of the not crosslinked adhesive.

European Patent Application Publication No. 0 340 906 discloses a hot melt polyurethane adhesive composition which comprises a mixture of at least two amorphous polyurethane prepolymers characterized in that each prepolymer provides a different glass transition point to the composition. It is stated that while the separate polymers do not have satisfactory properties, a mixture of the two prepolymers does.

European Patent Application Publication No. 0 246 743 discloses reactive urethane hot melt adhesives having reduced viscosity and which include ethylenically unsaturated monomers not having active hydrogen such as esters of acrylic and methacrylic acid.

Japanese Kokai Patent No. SHO 62 [1987] 181375 discloses a polyurethane adhesive comprising the reaction product of a diisocyanate and first and second polyester diols. The Japanese Kokai broadly discloses that the first polyester diol may comprise the reaction product of an aliphatic diol having from 2 to 4 methylene groups and a diacid which may be aliphatic or aromatic. If the acid is aliphatic, it is preferred that the acid have from 3 to 8 methylene groups although succinic acid is also mentioned. It is also broadly disclosed that the second polyester diol may comprise the reaction product of a diol having from 5 to 10 methylene groups and a diacid of the same character as that used to provide the first polyester diol. Despite the otherwise broad disclosure, the Japanese Kokai is principally directed to particular blends such as mixtures of polyhexamethylene adipate and ethylene adipate or polyhexamethylene adipate blended with a mixed polyester polyol that is the reaction product of ethylene glycol, 1,4-butanediol and adipic acid. Though not exemplified, it is intimated that blends of polyhexamethylene adipate and polybutylene adipate would be useful. Many of the substantial number of compositions suggested by the Japanese Kokai do not satisfy the standards established for the present adhesives. Correspondingly, many formulations useful in the present invention are not suggested or disclosed in the Japanese Kokai.

In order to decrease the set time of presently known hot melt adhesive formulations, crystalline or semicrystalline polymeric materials such as waxes are typically incorporated into the adhesive composition. However, such materials may adversely affect the overall performance of the adhesive. For example, it is not uncommon for a skilled adhesive formulator to accept a decline in adhesion or bond strength in exchange for a parallel decrease in set time. Presently known curing hot melt adhesive formulations with short set times only achieve the same with a concomitant deterioration of other important properties, most notably adhesion. In other cases, adhesion has been enhanced by the addition of tackifiers or other polymers, but usually at the expense of increased set time. A recent publication observes, "The art of a skilled formulator is still required to come up with a blend of polymers that in combination can meet the many requirements for a good commercially useful adhesive." (1988 Hot Melt Symposium, Moisture Curing Hot Melts, p. 90, Tappi Notes).

Consequently, there exists a need for a formulation that will be a good commercially useful adhesive, coating or sealant. For example, it would be desirable to have an adhesive formulation with a reduced set time. It would be especially desirable if the reduction in set time was achieved without adversely affecting other properties of the adhesive such as adhesion. Such adhesives would find considerable utility in a variety of applications, for example, the automated assembly procedure described hereinabove. In the instance described above, the lamp assembly production line could be operated more quickly because the lens would rapidly bond to the lamp

housing and without a loss of adhesion. Thus, the risk that the lens could come loose, even at increased production rates, would be reduced. The ability to reduce the set time of an adhesive formulation would also expand the universe of useful adhesives available for a particular application to those adhesives having desirable properties but long set times and which, therefore, are not presently employed.

## SUMMARY OF THE INVENTION

This invention relates to a blend or mixture of hydroxy-functional polymers. The mixture may comprise a blend of linear polyester polyols which, in turn, comprise first and second polyester polyols. Each polyester polyol is the reaction product of a polyol and a polyacid described according to the following equations:

$$a + b \leqq 4, \text{ and } c + d \geqq 6$$
$$a + b > 4 \text{ and } \leqq 6, \text{ and } c + d \geqq 10$$
$$a + b > 6 \text{ and } \leqq 8, \text{ and } c + d \geqq 12$$
$$a + b > 8 \text{ and } \leqq 10, \text{ and } c + d \geqq 16.$$

In the equations a is the number of methylene moieties in the polyol used to form the first polyester polyol, b is the number of methylene moieties in the polyacid used to form the first polyester polyol, c is the number of methylene moieties in the polyol used to form the second polyester polyol, and d is the number of methylene moieties in the polyacid used to form the second polyester polyol.

The mixture may also comprise a blend of at least one non-linear polyester polyol and one linear polyester polyol. The non-linear polyester polyol is selected from the group consisting of polyneopentyl adipate, polypropylene adipate and polycyclohexanedimethyl adipate. The linear polyester polyol is selected from the group consisting of polyethylene adipate, polybutylene succinate, polyhexamethylene sebacate, and polyhexamethylene dodecanedioate. However, if the linear polyester polyol is polyhexamethylene sebacate or polyhexamethylene dodecanedioate, then the non-linear polyester polyol is polyneopentyl adipate or polypropylene adipate.

Alternatively, the blend may comprise a blend of poly-ε-caprolactone and at least one linear polyester polyol selected from the group consisting of polyethylene adipate, polyethylene succinate, polybutylene succinate, and polyhexamethylene dodecanedioate.

In another aspect, the invention relates to a mixture of isocyanate-terminated polyurethane prepolymers in which the mixture comprises the reaction product of a polyisocyanate and the hydroxy-functional polymer combinations described above.

In still a further aspect, the invention relates to a mixture of isocyanate-terminated polyurethane prepolymers comprising first and second polyurethane prepolymers. The first and second prepolymers comprise, respectively, the reaction products of first and second aliphatic, essentially crystalline polyester polyols and a polyisocyanate. The first and second polyester polyols may be selected from the various linear and non-linear polyester polyols described above as well as poly-ε-caprolactone. The second prepolymer has a set time shorter than the first prepolymer.

The first and second polyester polyols typically have a number average molecular weight in the range of about 500 to about 20,000. Preferably the isocyanate index of the mixture is in the range of about 1.2/1 to about 10/1.

Diols useful in preparing the first and second polyester polyols include ethylene glycol, 1,4-butanediol, 1,5-pentanediol, 1,6-hexanediol, and 1,8-octanediol. Diacids useful in preparing the polyester polyols include succinic acid, glutaric acid, adipic acid, suberic acid, azelaic acid, and sebacic acid.

Preferably the mixture comprises from about 99.9 to about 5 parts by weight of the first prepolymer and from about 0.1 to about 95 parts by weight of the second prepolymer. More preferably, the mixture comprises from about 99 to about 50 parts by weight of the first prepolymer and from about 1 to about 50 parts by weight of the second prepolymer. Most preferably, the mixture comprises from about 95 to about 70 parts by weight of the first prepolymer and from about 5 to about 30 parts by weight of the second prepolymer. Addition of small amounts of the second prepolymer to the first prepolymer dramatically and surprisingly reduces the set time of the latter and without negatively, materially affecting adhesion.

The mixture may also comprise a third isocyanate-terminated polyurethane prepolymer which is the reaction product of a third polyester polyol and a polyisocyanate. The third polyester polyol is different from the first and second polyester polyols and poly-ε-caprolactone.

The invention also relates to method for reducing the set time of a first isocyanate-terminated polyurethane prepolymer. The method comprises the step of mixing the first prepolymer with a second isocyanate-terminated polyurethane prepolymer. The first and second prepolymers are as described above.

## BRIEF DESCRIPTION OF THE DRAWINGS

The invention will now be described with reference to the following drawing in which:

FIG. 1 is a graphical representation of adhesive set time as a function of the weight percent (wt.%) of a polyurethane prepolymer according to the invention.

## DETAILED DESCRIPTION OF THE PREFERRED EMBODIMENTS

Adhesive blends or mixtures according to the invention comprise generally at least first and second polyurethane prepolymers which, in turn, comprise the reaction product of at least two hydroxy-functional polymers with a polyisocyanate. Examples of hydroxy-functional polymers useful in the invention include polyester polyols, polylactam polyols, polyalkylenepolyols, polyalkylene ether polyols, polyacetal polyols, polyamide polyols, polyesteramide polyols, and polythioether polyols.

Preferred polyurethane prepolymers are those based at least in part on polyester polyols. Preferably, the polyester polyols are essentially crystalline or semicrystalline and are linear aliphatic or slightly branched structures containing primary hydroxyl end groups, although polyester polyols containing secondary hydroxyl groups or carboxyl end groups may also be useful. Preferably, the polyester polyols have a DSC melting point (explained more fully below) greater than about 20°C, more preferably between about 30°C and 130°C, and most preferably between about 40°C and 80°C. Amorphous polyester polyols with glass transition temperatures up to about 50°C may be useful in blends at less than 50% total polyester polyol weight. In certain cases, liquid polyester polyols may be useful in blends of polyesters at less than 30% total polyester polyol weight. Preferred polyester polyols typically have a number average molecular weight of about 500 to about 20,000, preferably of about 1,000 to about 6,000 and most preferably of about 3,000 to about 4,500.

Particularly preferred polyester polyols useful in the invention may be prepared by reacting a diol having the general structure $HO-(CH_2)_x-OH$ and a dicarboxylic acid having the general structure $HOOC-(CH_2)_y-COOH$, selected such that x is an integer in the range of from about 2 to about 10, and y is an integer in the range of from about 1 to about 10.

Examples of useful linear diols include ethylene glycol, 1,4-butanediol, 1,5-pentanediol, 1,6-hexanediol, 1,8-octanediol, and 1,10-decanediol. Examples of useful linear diacids include succinic acid, glutaric acid, adipic acid, suberic acid, azelaic acid, sebacic acid, and 1,12-dodecanedioic acid. Included within the scope of useful diacids are diacid derivatives such as carboxylate esters, especially the methyl and ethyl esters, acid halides such as acid chlorides, and acid anhydrides.

Another material useful as a polyester polyol is poly-ε-caprolactone (sometimes referred to hereinafter as "PCP") which has the general structural formula

$$H-[O-\overset{\overset{O}{\|}}{C}-(CH_2)_5]_z-OH$$

where z ≧1 and indicates the degree of polymerization. Poly-ε-caprolactone is typically obtained by a ring opening polymerization of ε-caprolactone.

Examples of commercially available materials useful as polyester polyols include the LEXOREZ series commercially available from Inolex Chemical Co. Specific examples of such resins include LEXOREZ 1130-30P, LEXOREZ 1150-30P, LEXOREZ 1151-35P, and LEXOREZ 1110-25P. Examples of other commercially available polyester polyols useful in the invention are the RUCOFLEX series of resins such as RUCOFLEX 105-37 available from Ruco Polymer Corporation and FORMREZ 66-20 from Witco Chemical Company. Examples of commercially available poly-ε-caprolactones that are useful in the invention include TONE 1271 and TONE 0260 from Union Carbide. Component ratios can be determined by the performance properties desired.

Preferred mixtures of hydroxy-functional polymers useful in the invention include:

(1) linear polyester polyol blends, wherein the polyester polyols are the reaction product of a polyol and a polyacid, wherein

$$a + b \leqq 4, \text{ and } c + d \geqq 6$$
$$a + b > 4 \text{ and } \leqq 6, \text{ and } c + d \geqq 10$$
$$a + b > 6 \text{ and } \leqq 8, \text{ and } c + d \geqq 12$$
$$a + b > 8 \text{ and } \leqq 10, \text{ and } c + d \geqq 16$$

wherein a is the number of methylene moieties in the polyol used to form the first polyester polyol,
b is the number of methylene moieties in the polyacid used to form the first polyester polyol,

c is the number of methylene moieties in the polyol used to form the second polyester polyol, and
d is the number of methylene moieties in the polyacid used to form the second polyester polyol; or
(2) a blend of at least one non-linear polyester polyol and one linear polyester polyol, wherein the non-linear polyester polyol is selected from the group consisting of polyneopentyl adipate, polypropylene adipate and polycyclohexanedimethyl adipate, and the linear polyester polyol is selected from the group consisting of polyethylene adipate, polybutylene succinate, polyhexamethylene sebacate or polyhexamethylene dodecanedioate, provided that when the linear polyester polyol is polyhexamethylene sebacate or polyhexamethylene dodecanedioate, the non-linear polyester polyol is polyneopentyl adipate or polypropylene adipate; or
(3) a blend of poly-ε-caprolactone and at least one linear polyester polyol selected from the group consisting of polyethylene adipate, polyethylene succinate, polybutylene succinate, and polyhexamethylene dodecanedioate.

Particularly preferred mixtures of hydroxy-functional polymers include:
(1) linear polyester polyol blends, wherein the polyester polyols are the reaction product of a diol and a diacid, wherein

$$a + b = 4, \text{ and } c + d \geqq 6$$
$$a + b = 6, \text{ and } c + d \geqq 10$$
$$a + b = 8, \text{ and } c + d \geqq 12$$
$$a + \text{-}b = 10, \text{ and } c + d \geqq 16$$

wherein a, b, c, and d are as described above;
(2) a blend of linear and non-linear polyester polyols, wherein the non-linear polyester polyol is selected from the group consisting of polyneopentyl adipate, polypropylene adipate and polycyclohexanedimethyl adipate, and the linear polyester polyol is selected from the group consisting of polyethylene adipate, polybutylene succinate, polyhexamethylene sebacate, and polyhexamethylene dodecanedioate provided that when the linear polyester polyol is polyhexamethylene sebacate or polyhexamethylene dodecanedioate, the non-linear polyester polyol is polyneopentyl adipate or polypropylene adipate;
(3) a mixture of polyethylene adipate and polyhexamethylene adipate;
(4) a mixture of polyhexamethylene adipate and polyhexamethylene dodecanedioate; or
(5) a mixture of linear polyester polyols wherein one of the linear polyester polyols is poly-ε-caprolactone and at least one other is selected from the group consisting of polyethylene adipate, polyethylene succinate, polybutylene succinate, and polyhexamethylene dodecanedioate.

The polyester polyols may comprise more than one diol and/or more than one diacid so long as each polyester polyol remains essentially crystalline or semicrystalline.

It has been noted above that the polyester polyols should be essentially crystalline or semicrystalline. As used herein, the terms essentially crystalline and semicrystalline mean that the polyester polyol displays a crystalline melting point as determined by DSC (differential scanning calorimetry). More particularly, whether a material displayed a crystalline melting point was determined with a Perkin Elmer Model DSC-2 differential scanning calorimeter coupled with a Perkin Elmer Model 3600 Data Station programmed by TADS (Thermal Analysis Data Station) software. Samples for analysis were heated to 100°C from 25°C under a controlled gradient of about 10°C per minute.

The polyester polyols may be blended with other monomeric materials so as to incorporate the same directly into the polyester polyols. "Other monomeric materials" which may be incorporated into the first and second polyester polyols include triols, polyethers, aromatic and cyclic diacids such as isophthalic acid, terephthalic acid, phthalic acid, cyclohexane dicarboxcylic acid and diacid derivatives thereof (carboxylate esters, acid anhydrides, acid halides), neopentyl glycol, trimethylolpropane, 1,2-propylene glycol, 1,4-cyclohexane diol, 1,4-cyclohexanedimethanol, and other short chain polyols including those which are slightly branched or have secondary hydroxyl groups.

Such "other monomeric materials" may be incorporated for a variety of reasons for example to modify the flexibility, adhesion, temperature resistance, and the like of the ultimate adhesive system. The exact level of other monomeric material is not critical to the invention provided that the polyester polyols remain essentially crystalline and that one of the prepolymers has a shorter set time than the other, the significance of which is explained more fully hereinbelow.

Polyisocyanates which can be reacted with the hydroxy-functional materials to form the prepolymers may be aliphatic or aromatic. Preferably, they are aromatic diisocyanates such as diphenylmethane-2,4′-diisocyanate and/or 4,4′-diisocyanate; tolylene-2,4-diisocyanate and -2,6-diisocyanate (TDI) and mixtures thereof. Other examples include: naphthylene-1,5-diisocyanate;
triphenylmethane-4,4′, 4″-triisocyanate;
phenylene-1,3-diisocyanate and -1,4-diisocyanate;

dimethyl-3,3'-biphenylene-4,4'-diisocyanate;
diphenylisopropylidine-4,4'-diisocyanate; biphenylene diisocyanate; xylylene-1,3-diisocyanate and xylylene-1,4-diisocyanate.

A list of useful commercially available polyisocyanates is found in the Encyclopedia of Chemical Technology, Kirk-Othmer, 2nd Ed., Vol. 12, pp. 46-47, Interscience Pub., N.Y. (1967), which is incorporated herein by reference. Especially preferable isocyanates include diphenylmethane-4,4'-diisocyanate (MDI) and its isomers, and mixtures thereof.

Isocyanate-functional derivatives of MDI and TDI may be used, such as liquid mixtures of the isocyanate-functional derivatives with melting point modifiers (e.g., mixtures of MDI with polycarbodiimide adducts such as ISONATE 143L, commercially available from Dow Chemical Company); small amounts of polymeric diphenylmethane diisocyanates, preferably 10% or less by weight of the total isocyanate components, (e.g., PAPI, and the series PAPI 20, commercially available from Dow Chemical Company, the MONDUR series of isocyanates commercially available from Mobay Chemical Corp., and RUBINATE M, commercially available from ICI Chemicals, Inc.); and blocked isocyanate compounds formed by reacting aromatic isocyanates or the above-described isocyanate-functional derivatives with blocking agents such as ketoximes and the like. Such blocked isocyanate-functional derivatives will, for convenience, be regarded herein as isocyanate-functional derivatives of MDI and TDI.

The prepolymers may be prepared by techniques that are well known in the art. For example, first and second prepolymers may be formed by reacting a mixture of first and second polyester polyols and polyisocyanate in a suitable vessel. Alternatively, first and second prepolymers may be prepared separately by individually reacting first and second polyester polyols with polyisocyanate followed by blending of the resultant first and second prepolymers. Still further, first and second prepolymers may be prepared by forming one of the prepolymers and subsequently forming the other prepolymer in the first.

Typically, the components are mixed at an elevated temperature, using conventional mixing techniques. It is preferred to mix the components under anhydrous conditions to prevent premature moisture curing. Generally, the prepolymers are prepared without the use of solvents.

The isocyanate equivalents should be present in the reaction mixture in an amount greater than that of the hydroxyl equivalents. The equivalent ratio of isocyanate-to-hydroxyl (sometimes referred to hereinafter as the isocyanate index) is preferably from about 1.2/1 to about 10/1 and most preferably from about 1.6/1 to 2.2/1.

The blends or mixtures of the present invention comprise from about 99.9 to about 5 parts by weight of a first prepolymer and from about 0.1 to about 95 parts by weight of a second prepolymer. Preferably, the blends or mixtures comprise from about 99 to about 50 parts by weight of a first prepolymer and from about 1 to about 50 parts by weight of a second prepolymer. More preferably, the mixtures comprise from about 95 to about 70 parts by weight of a first prepolymer and from about 5 to about 30 parts by weight of a second prepolymer. The second prepolymer has a shorter set time than the first prepolymer. It will be understood that in mixtures comprising the first and second prepolymers, the parts by weight contributions of the first and second prepolymers sum to 100.

The compositions of the invention may further comprise other polyurethane prepolymers derived from hydroxy-functional materials other than those used to actually prepare the first and second prepolymers, in which case, the parts by weight contributions of all the prepolymers sum to 100. The other prepolymers may be included for a variety of purposes such as to modify adhesion, green strength build-up, tack, final strength, etc. of the ultimate adhesive composition. The other prepolymers may be a single prepolymer or a combination of two or more prepolymers. Examples of hydroxy-functional materials useful in preparing the other prepolymers include polyester (including polylactone) polyols, polyalkylene polyols, polyalkylene ether polyols, polyacetal polyols, polyamide polyols, polyesteramide polyols, polythioether polyols, polytetramethylene ether glycols, etc. Amorphous polyesters may also be useful as may, in certain cases, liquid polyesters.

Examples of commercially available hydroxy-functional materials useful in preparing the other prepolymers include the POLYMEG series of poly(tetramethylene ether) glycols, such as POLYMEG 2000 (available from Q.O. Chemical, Inc.) the TERATHANE series of poly(tetramethylene ether) glycols (available from DuPont), and LEXOREZ 3500-30P (a polyester polyol, MN 3,740, hydroxyl number of 30, available from Inolex Chemical Co.).

Various other ingredients or adjuvants can be added to the mixture of first and second prepolymers, as well as to the other prepolymers if such be included, to impart to or to modify particular characteristics of the ultimate adhesive composition. These ingredients should be added only at a level that does not materially interfere with the set time of the adhesive. For example, chain-extension agents (e.g., short chain polyols such as ethylene glycol or butanediol); fillers (e.g., carbon black; glass, ceramic, metal or plastic bubbles; metal oxides such as zinc oxide; and minerals such as talc, clays, silica, silicates, and the like); thermoplastic resins; plasticizers; antioxidants; pigments; U.V. absorbers; and adhesion promoters such as silanes, and the like may be

included to modify adhesion, green strength build-up, tack, flexibility, etc.

In addition, the compositions of the invention may include an effective amount of a catalyst or reaction accelerator such as tertiary amines, metal-organic compounds, co-curatives, and the like. An effective amount of a catalyst is preferably from about 0.01 to 2 percent by weight of the total prepolymer weight. More preferably, the catalyst is present at a level of about 0.05 to about 0.5 percent, based on the total weight of the prepolymers employed.

The compositions of the invention achieve their initial, or green strength, through crystallization, then continue to cure by exposure to water, e.g., water vapor or moisture. High humidity and heat will provide an accelerated rate of cure while low humidity (e.g., 15% relative humidity or less) will provide a slower rate of cure.

Without wishing to be bound by any particular theory, it is postulated that a certain relationship must exist between the hydroxy-functional materials used to form the first and second prepolymers if a dramatic reduction in set time is to be observed upon addition of small amounts of one prepolymer to the other. It is believed that an appropriate relationship between the hydroxy-functional materials exists if the hydroxy-functional materials of one prepolymer (e.g., the second prepolymer) solidify or crystallize more quickly than the corresponding materials of the other prepolymer (e.g., the first prepolymer) and if the blend of the hydroxy-functional materials is immiscible or partially immiscible.

If the hydroxy-functional materials (e.g., a polyester polyol) of the second prepolymer solidify or crystallize more rapidly than the hydroxy-functional materials (e.g., a polyester polyol) of the first prepolymer, it is further postulated that the faster crystallizing material behaves analogously to a nucleating agent and induces the crystallization of the slower crystallizing material. Preferably, the faster crystallizing hydroxy-functional materials relative to the slower crystallizing hydroxy-functional materials have a similar crystalline melting point (as determined by differental scanning calorimetry), an elevated crystallization temperature, and a surface energy differential that is large enough to allow for crystallization.

According to the theory, it is also believed that the blend of hydroxy-functional materials must be immiscible or partially immiscible. Whether the hydroxy-functional materials are immiscible may be determined with reference to whether the blends are non-hairing. By non-hairing it is meant that during application of the adhesive by extrusion, thin threads or hairs of the molten composition do not form at the applicator tip when the tip is removed from the point where the adhesive has been deposited. Polymer blends which exhibit non-hairing behavior are at least partially immiscible for purposes of the present invention. The non-hairing characteristic should be determined with reference to an approximately equal parts by weight blend of the hydroxy-functional materials exhibits non-hairing behavior.

If such a relationship is observed and if the hydroxy-functional materials of one prepolymer (e.g., the second prepolymer) solidify or crystallize more rapidly than the hydroxy-functional materials of the other prepolymer (e.g., the first prepolymer), it is believed that the addition of small amounts of the "second prepolymer" to the "first prepolymer" will result in a dramatic decrease in the set time of the "first prepolymer" and that the blend will be suitable for use in the invention.

The following examples are offered to aid understanding of the present invention and are not to be construed as limiting the scope thereof. All parts are by weight unless otherwise stated.

**General Preparation of the Polyurethane Prepolymers**

4,4′-diphenylmethane diisocyanate (MDI) is added to a 600 ml, stainless steel reactor fitted with a gas inlet adapter, and a cover having a rubber gasket, a gas inlet, a stirrer opening, and a stirring rod. The MDI is heated to 100°C and melted with efficient stirring under a nitrogen blanket. After the MDI melts, the first polyester polyol is added to the reactor. The mixture is stirred under nitrogen for about 15 minutes. The second polyester polyol component is then added to the reactor. Stirring and heating are continued for about 15 minutes, and then 4,4′-(oxydi-2,1-ethanediyl)bis-morpholine (THANCAT DMDEE, a cure-promoting catalyst available from Texaco Chemical Co.) is added. Stirring is continued under vacuum for about 1 hour with heating to 100°C maintained throughout. The resulting mixture is poured into nitrogen purged metal containers and sealed. The containers are stored in a desiccator.

The reaction between the MDI and the first and second polyester polyols is essentially complete. A minor amount of unreacted ingredients remains, typically less than 3 percent by weight, indicating near complete consumption of the hydroxy-functional materials.

**Examples 1-14**

A series of isocyanate-terminated polyurethane prepolymers was made as described above in the general preparation. The compositions of examples 1-14 were tested to determine their set time. Set time was measured

as follows. A 0.5 ± 0.05 g quantity of the adhesive composition was extruded at 121°C onto the center portion (about 5 cm from each end) of several 2.5 cm wide x 10 cm long x 0.8 cm thick pieces of Douglas fir (obtained from Martin Lumber, St. Paul, MN in 1″ x 4″ x 5/16″ sections having one side smooth). A timer was started. After 10 seconds, second pieces of Douglas fir of the same dimensions were bonded on their center points and at right angles to each first piece. Firm hand pressure was used to mate the surfaces and squeeze excess composition from the bond lines.

At various intervals, a 4.5 kg tensile load was pneumatically applied to each 6.45 sq. cm bond area. The set time was recorded as the time which elapsed before the bond was able to support the 4.5 kg load for 120 seconds. Longer elapsed times indicated slower set times. The results of these tests are reported in Table 1.

The data of Table 1 show that the blends of the invention (examples 2-13) have dramatically shortened set times as compared to the set time of the first prepolymer alone (example 1). The addition of a mere 1 part of a second prepolymer (prepared from polyhexamethylene 1,12-dodecanedioate (sometimes referred to hereinafter as "PHD")) to 99 parts of a first prepolymer (prepared from 1,6-polyhexamethylene adipate (sometimes referred to hereinafter as "PHA")) decreased the set time of the first prepolymer by 24%. (Compare examples 1 and 2). Likewise, comparison of example 1 with example 5 shows that the addition of 4 parts of the second prepolymer to 96 parts of the first prepolymer decreased the set time of the first prepolymer by 47%. The dramatic reduction in set time following the addition of small amounts of the second prepolymer to the first prepolymer is surprising and unexpected. Although the second prepolymer sets more rapidly than the first prepolymer, a set time reduction proportional to the amount of the second prepolymer would otherwise be expected.

The data of Table 1 further show that although the dramatic set time reduction is maintained in adhesive compositions comprising equal amounts of the first and second prepolymers, significant further reductions in set time are not realized beyond about 15-25% of the second prepolymer.

The data of Table 1 are illustrated graphically in FIG. 1 which is a plot of adhesive set time v. weight percent of the second prepolymer in the blend.

**TABLE 1**

| Example No. | 1 | 2 | 3 | 4 | 5 | 6 | 7 | 8 | 9 | 10 |
|---|---|---|---|---|---|---|---|---|---|---|
| 1st Prepolymer[1] | 100.0 | 99.0 | 98.0 | 97.0 | 96.0 | 95.0 | 90.0 | 85.0 | 80.0 | 75.0 |
| 2nd Prepolymer[2] | 0.0 | 1.0 | 2.0 | 3.0 | 4.0 | 5.0 | 10.0 | 15.0 | 20.0 | 25.0 |
| DMD[3] | 0.2 | 0.2 | 0.2 | 0.2 | 0.2 | 0.2 | 0.2 | 0.2 | 0.2 | 0.2 |
| Isocyanate Index | 1.8 | 1.8 | 1.8 | 1.8 | 1.8 | 1.8 | 1.8 | 1.8 | 1.8 | 1.8 |
| Set Time (min.) | 1.42 | 1.08 | 1.0 | 0.83 | 0.75 | 0.83 | 0.75 | 0.67 | 0.50 | 0.33 |

1 Prepared from 1,6-polyhexamethylene adipate (PHA) (LEXOREZ 1130-30P available from Inolex Chemical Co., hydroxyl number of 33, MN of 3417).

2 Prepared from 1,6-polyhexamethylene 1,12-dodecanedioate (PHD) (hydroxyl number of 30, Mn of 3740).

3 4,4'-(oxydi-2,1-ethanediyl)bis-morpholine (THANCAT DMDEE available from Texaco Chemical Company).

**TABLE 1**

| Example No. | 11 | 12 | 13 | 14 |
|---|---|---|---|---|
| 1st Prepolymer[1] | 70.0 | 60.0 | 50.0 | 0.0 |
| 2nd Prepolymer[2] | 30.0 | 40.0 | 50.0 | 100.0 |
| DMD[3] | 0.2 | 0.2 | 0.2 | 0.2 |
| Isocyanate Index | 1.8 | 1.8 | 1.8 | 1.8 |
| Set Time (min.) | 0.33 | 0.30 | 0.30 | 0.30 |

1 Prepared from 1,6-polyhexamethylene adipate (PHA) (LEXOREZ 1130-30P available from Inolex Chemical Co., hydroxyl number of 33, MN of 3417).

2 Prepared from 1,6-polyhexamethylene 1,12-dodecanedioate (PHD) (hydroxyl number of 30, Mn of 3740).

3 4,4'-(oxydi-2,1-ethanediyl)bis-morpholine (THANCAT DMDEE available from Texaco Chemical Company).

**Examples 15-22**

A series of adhesive compositions comprising the first and second prepolymers along with a third and a fourth prepolymer were made as described in the general preparation except that after the polyester polyol of the second prepolymer had been reacted with the MDI, the polyols employed for the third and fourth prepolymers were each added separately and allowed to react with MDI in turn. The isocyanate index of each composition was 1.8. Each of the resulting compositions was tested for set time as described in examples 1-14 above. Results are reported in Table 2.

Table 2 illustrates not only the dramatic reduction in set time that is achieved when small amounts (2.5 parts) of a second prepolymer are added to a first prepolymer but that this reduction in set time is not adversely affected by including other polyester polyols in the adhesive composition. Examples 16-22 also show that set time is dramatically decreased even when the adhesive composition to which the second prepolymer is added inherently has quite a long set time. The set time of example 15 (nearly 6 minutes) is reduced to 2-3 minutes by the addition of no more than 5 parts of the second prepolymer, and as little as 2.5 parts.

**TABLE 2**

| Example No. | 15 | 16 | 17 | 18 | 19 | 20 | 21 | 22 |
|---|---|---|---|---|---|---|---|---|
| 1st Prepolymer[1] | 55.0 | 52.5 | 50.0 | 45.0 | 40.0 | 35.0 | 30.0 | 0.0 |
| 2nd Prepolymer[2] | 0.0 | 2.5 | 5.0 | 10.0 | 15.0 | 20.0 | 25.0 | 55.0 |
| 3rd Prepolymer[3] | 18.0 | 18.0 | 18.0 | 18.0 | 18.0 | 18.0 | 18.0 | 18.0 |
| 4th Prepolymer[4] | 27.0 | 27.0 | 27.0 | 27.0 | 27.0 | 27.0 | 27.0 | 27.0 |
| DMD[5] | 0.2 | 0.2 | 0.2 | 0.2 | 0.2 | 0.2 | 0.2 | 0.2 |
| Isocyanate Index | 1.8 | 1.8 | 1.8 | 1.8 | 1.8 | 1.8 | 1.8 | 1.8 |
| Set Time (min.) | 5.83 | 2.17 | 2.83 | 1.83 | 1.75 | 1.17 | 0.58 | 0.3 |

1 Prepared from 1,6-polyhexamethylene adipate (PHA) (LEXOREZ 1130-30P available from Inolex Chemical Co., hydroxyl number of 33, MN of 3417).

2 Prepared from 1,6-polyhexamethylene 1,12-dodecanedioate (PHD) (hydroxyl number of 30, Mn of 3740).

3 Prepared from a polyester polyol (DYNACOLL 7130, available from Hüls America hydroxyl number of 30, Mn of 3740).

4 Prepared from a polyester polyol (LEXOREZ 3500-30p, available from Inolex Chemical Co., hydroxyl number of 30, Mn of 3740).

5 4,4'-(oxydi-2,1-ethanediyl)bis-morpholine (THANCAT DMDEE available from Texaco Chemical Company).

**Examples 23-24**

A series of isocyanate-terminated polyurethane prepolymers was prepared as described above. Examples 23-24 employ polyhexamethylene sebacate (sometimes referred to hereinafter as "PHSE") as the second polyester polyol. PHSE comprises the reaction product of 1,6-hexanediol and sebacic acid. PHSE is commercially available from Witco Chemical Co. under the trade designation FORMREZ YA111-9. The isocyanate index of each example is 1.8.

The PHSE-based prepolymer was combined with a PHA-based prepolymer to determine the effect of the former on the set time of the latter. The results are shown below in Table 3. Table 3 illustrates that the PHSE-based prepolymer had a negligible effect on the set time of the PHA-based prepolymer. A 9% reduction in set time was observed in adhesive formulations comprising 10% PHSE-based prepolymer, a reduction proportional to the amount of the PHSE-based prepolymer added. With reference again to examples 1 and 7 of Table 1, it can be seen that a 10% addition of a PHD-based prepolymer to a PHA-based prepolymer resulted in a 47% reduction in set time. PHSE contributes 14 methylene groups, PHA contributes 10. Thus, a blend of a PHSE-based prepolymer and a PHA-based prepolymer does not satisfy the relationship between the methylene moieties contributed by the respective diols and dicarboxylic acids described more fully hereinabove.

**Table 3**

| Example No. | 1 | 23 | 24 |
|---|---|---|---|
| 1st Prepolymer[1] | 100.0 | 0.0 | 90.0 |
| 2nd Prepolymer[2] | 0.0 | 100.0 | 10.0 |
| DMD[3] | 0.2 | 0.2 | 0.2 |
| Set Time (min.) | 1.42 | 0.46 | 1.29 |

[1] Prepared from 1,6-polyhexamethylene adipate (PHA) (available from Inolex Chemical Co. as LEXOREZ 1130-30P, hydroxyl number of 33, Mn of 3417).

[2] Prepared from 1,6-polyhexamethylene sebacate (PHSE) (available from Witco Chemical Co. as FORMREZ YA111-9).

[3] 4,4'-(oxydi-2,1-ethanediyl)bis-morpholine (THANCAT DMDEE available from Texaco Chemical Co.).

**Examples 25-27**

A series of isocyanate-terminated polyurethane prepolymers was prepared as described above in the general preparation and in examples 23-24 except that a poly-ε-caprolactone (PCP) based prepolymer was substituted for the PHA-based prepolymer of examples 23-24 and, in example 27, a PHD-based prepolymer was substituted for the PHSE-based prepolymer. The results are shown in Table 4. The isocyanate index of each example was 1.8. An effect similar to that of Table 3 was observed. That is, the addition of 10% of the PHD-based prepolymer reduced the set time of the PCP-based prepolymer by 50% (example 27). However, a 10% addition of the PHSE-based prepolymer to the PCP-based prepolymer had no significantly measurable effect on the set time of the PCP-based prepolymer. (See example 26). As noted hereinabove, the combination of a PHSE-based prepolymer with a PCP-based prepolymer is not considered to be useful for the invention, although a blend of a PHD-based prepolymer and a PCP-based prepolymer is.

**Table 4**

| Example No. | 23 | 25 | 26 | 27 |
|---|---|---|---|---|
| 1st Prepolymer[1] | 100.0 | 0.0 | 10.0 | 0.0 |
| 2nd Prepolymer[2] | 0.0 | 0.0 | 0.0 | 10.0 |
| 3rd Prepolymer[3] | 0.0 | 100.0 | 90.0 | 90.0 |
| DMD[4] | 0.2 | 0.2 | 0.2 | 0.2 |
| Set Time (min.) | 0.46 | 2.00 | 2.00 | 1.00 |

1 Prepared from 1,6-polyhexamethylene sebacate (PHSE) (available from Witco Chemical Co. as FORMREZ YA111-9).

2 Prepared from 1,6-polyhexamethylene 1,12-dodecanedioate (PHD).

3 Prepared from poly-ε-caprolactone (available from Union Carbide Corp. as TONE 1271).

4 4,4'-(oxydi-2,1-ethanediyl)bis-morpholine (THANCAT DMDEE available from Texaco Chemical Co.).

**Examples 28-32**

A series of isocyanate-terminated polyurethane prepolymers was prepared as described above in the general preparation to observe the effect of various polyester polyols on the set time of a polyethylene adipate (hereinafter referred to as "PEA") based prepolymer. The results are shown below in Table 5.

Table 5

| Example No. | 28 | 29 | 30 | 31 | 32 |
|---|---|---|---|---|---|
| 1st Prepolymer[1] | 100.0 | 90.0 | 90.0 | 90.0 | 90.0 |
| 2nd Prepolymer | | | | | |
| (a)[2] | 0.0 | 10.0 | 0.0 | 0.0 | 0.0 |
| (b)[3] | 0.0 | 0.0 | 10.0 | 0.0 | 0.0 |
| (c)[4] | 0.0 | 0.0 | 0.0 | 10.0 | 0.0 |
| (d)[5] | 0.0 | 0.0 | 0.0 | 0.0 | 10.0 |
| DMD[6] | 0.2 | 0.2 | 0.2 | 0.2 | 0.2 |
| Set Time (min.) | 38-40 | 38-40 | 26-27 | 22-23 | 19-20 |

1 Prepared from 1,2-polyethylene adipate (PEA) (available from Inolex Chemical Co. as LEXOREZ 1110-25P).

2 Prepared from 1,4-polybutylene adipate (PBA) (available from Inolex Chemical Co. as LEXOREZ 1151-35P).

3 Prepared from 1,6-polyhexamethylene adipate (PHA) (available from Inolex Chemical Co. as LEXOREZ 1130-30P).

4 Prepared from 1,6-polyhexamethylene sebacate (PHSE) (available from Witco Chemical Co. as FORMREZ YA111-9).

5 Prepared from 1,6-polyhexamethylene 1,12-dodecanedioate (PHD).

6 4,4'-(oxydi-2,1-ethanediyl)bis-morpholine (THANCAT DMDEE available from Texaco Chemical Co.).

Table 5 shows that while 10 parts of a polybutylene adipate (hereinafer "PBA") based prepolymer had no effect on the set time of a PEA-based prepolymer, 10 parts of a PHA-based prepolymer reduced the set time by 32%, while 10 parts of a PHSE-based prepolymer reduced the set time 42%, and 10 parts of a PHD-based prepolymer reduced the set time 50%. PBA contributes 8 methylene groups whereas PEA contributes 6. Thus the relationship between the contributed methylene moieties does not satisfy the above described criteria.

**Examples 33-36**

A series of isocyanate-terminated polyurethane prepolymers was prepared as described above in the general preparation to observe the effect of various polyester polyols on the set time of a PBA-based prepolymer. The isocyanate index of each example was 1.8. The results are shown below in Table 6.

Table 6

| Example No. | 33 | 34 | 35 | 36 |
|---|---|---|---|---|
| 1st Prepolymer[1] | 100.0 | 90.0 | 90.0 | 90.0 |
| 2nd Prepolymer | | | | |
| (a)[2] | 0.0 | 10.0 | 0.0 | 0.0 |
| (b)[3] | 0.0 | 0.0 | 10.0 | 0.0 |
| (c)[4] | 0.0 | 0.0 | 0.0 | 10.0 |
| DMD[5] | 0.2 | 0.2 | 0.2 | 0.2 |
| Set Time (min.) | 4.5 | 3.8 | 2.0 | 2.0 |

1 Prepared from 1,4-polybutylene adipate (PBA) (available from Inolex Chemical Co. as LEXOREZ 1151-35P).

2 Prepared from 1,6-polyhexamethylene adipate (PHA) (available from Inolex Chemical Co. as LEXOREZ 1130-30P).

3 Prepared from 1,6-polyhexamethylene sebacate (PHSE) (available from Witco Chemical Co. as FORMREZ YA111-9).

4 Prepared from 1,6-polyhexamethylene 1,12-dodecanedioate (PHD).

5 4,4'-(oxydi-2,1-ethanediyl)bis-morpholine (THANCAT DMDEE available from Texaco Chemical Co.).

Table 6 shows that while 10 parts of a PHA-based prepolymer reduced the set time of a PBA-based prepolymer by approximately 17%, 10 parts of a PHSE-based prepolymer reduced the set time 56%, as did 10 parts of a PHD-based prepolymer. It will be understood that the 10 methylene groups contributed by the PHA and the 8 methylene groups provided by the PBA do not satisfy the relationship, described above.

**EXAMPLES 37-44**

A series of isocyanate-terminated polyurethane prepolymers was prepared as described above in the general preparation to observe the effect on adhesion of blends according to the invention. In particular, the effect on adhesion and overlap shear strength to wood and various polymeric substrates was determined.

Plastic adhesion was determined as follows. The adhesive was extruded at 121°C onto the center portion of a series of 2.5 cm wide by 10 cm long by 0.3 cm thick pieces of isopropanol-wiped rigid polystyrene (Huntsman grade 730) (examples 37-38). Immediately, a separate piece of 3.8 cm wide by 28.5 cm long piece of canvas was bonded to each polystyrene substrate using a press at 0.7 MPa for 10 seconds. This was sufficient pressure to force the adhesive to cover the entire bond area and squeeze excess composition out of the edges of the bond area. The bonded substrates were then conditioned at 25°C and 50% relative humidity for 7 days. The canvas was then trimmed to a 2.5 cm width and the resulting coupons were analyzed using an Instron tensile tester in the 180° angle of peel mode at a crosshead speed of 5 cm per minute with the polystyrene secured to the fixed upper jaw and the canvas secured to the moveable lower jaw. Plastic adhesion value was recorded as the average of the high and low readings for the four coupons. The results are shown in Table 7.

Overlap shear strength was determined as follows. The adhesive was extruded at 121°C onto the center portions of 2.5 cm wide by 10 cm long by 0.3 cm thick pieces of isopropanol-wiped acrylonitrile/butadiene/styrene (commercially available from Precision Punch, Minneapolis, MN) (examples 39-40), and methyl ethyl ketone-wiped red glass fiber reinforced polyester (commercially available from Precision Punch, Minneapolis, MN) (examples 41-42), and 2.5 cm wide by 10 cm long by 0.8 cm thick sections of one side smooth maple (commercially available from Martin Lumber, St. Paul, MN)(examples 43-44). After the adhesive was applied

to the substrate, 3-5 mil diameter glass beads were sparingly sprinkled on the adhesive to control the thickness of the adhesive bondline.

The bonds were than formed by mating the substrates with other pieces of material of the same composition to form a 3.2 $cm^2$ overlap bond area. Firm hand pressure was applied to compress the adhesive to a thickness of 3-5 mils and to squeeze excess composition from the bond area. The bonded substrates were then conditioned at 25°C and 50% relative humidity for 7 days. The samples were analyzed using a Sintech tensile tester at a crosshead speed of 5 cm per minute. Overlap shear strength was reported as the average of four samples. The results are shown in Table 7.

**TABLE 7**

| Example No.[1] | 37 | 38 | 39 | 40 | 41 | 42 | 43 | 44 |
|---|---|---|---|---|---|---|---|---|
| 1st Prepolymer | | | | | | | | |
| (a)[2] | 70.0 | 60.0 | 0.0 | 0.0 | 0.0 | 0.0 | 0.0 | 0.0 |
| (b)[3] | 0.0 | 0.0 | 100.0 | 90.0 | 100.0 | 90.0 | 100.0 | 90.0 |
| 2nd Prepolymer[4] | 0.0 | 10.0 | 0.0 | 10.0 | 0.0 | 10.0 | 0.0 | 10.0 |
| 3rd Prepolymer[5] | 30.0 | 30.0 | 0.0 | 0.0 | 0.0 | 0.0 | 0.0 | 0.0 |
| DMD[6] | 0.2 | 0.2 | 0.2 | 0.2 | 0.2 | 0.2 | 0.2 | 0.2 |
| Set Time (min.) | 1.38 | 0.5 | 1.42 | 0.75 | 1.42 | 0.75 | 1.42 | 0.75 |
| Plastic Adhesion (lbs./in. width) | 47-55 | 55-62 | NT | NT | NT | NT | NT | NT |
| Overlap Shear Strength (lbs./in.$^2$) | NT | NT | 1332* | 1214* | 1795* | 1563* | 1652 | 1550 |

1 The isocyanate index of each example was 1.8.

2 Prepared from 1,6-polyhexamethylene adipate (PHA) (FORMREZ 66-20 available from Witco Chemical Co.)

3 Prepared from 1,6-polyhexamethylene adipate (PHA) (LEXOREZ 1130-30p available from Inolex Chemical Co.).

4 Prepared from 1,6-polyhexamethylene 1,12-dodeconedioate (PHD) (hydroxyl number of 30, Mn of 3740).

5 Prepared from TERATHANE 2000, a poly(tetramethylene ether) glycol commercially available from E.I. duPont de Nemours & Co., Inc.

6 4,4'-(oxydi-2,1-ethanediyl)bis-morpholine (THANCAT DMDEE available from Texaco Chemical Company).

* Indicates substrate failure.
NT = Not Tested.

Table 7 shows that the addition of 10 parts of a PHD-based prepolymer to a blend of hydroxy-functional materials comprising a PHA-based prepolymer and, in the case of examples 37 and 38, further comprising a prepolymer derived from poly(tetramethylene ether) glycol did not adversely affect adhesion. Table 7 further shows that the addition of up to 30 parts of the poly(tetramethylene ether) glycol did not disrupt the capacity of the PHD-based prepolymer to dramatically reduce the set time of the PHA-based prepolymer.

The adhesive compositions of the invention comprise first and second polyurethane prepolymers having reduced set times. Small amounts of the second prepolymer dramatically, surprisingly and unexpectedly decrease the set time of the adhesive compositions. Advantageously, the set time reduction is achieved without compromising other properties of the adhesive, most notably, adhesion. Consequently, the compositions of the invention are useful in environments such as automated assembly and production lines wherein it is desirable to have short set times.

Reasonable variations or modifications are possible within the scope of the foregoing specification and drawing without departing from the invention which is defined in the accompanying claims.

## Claims

**1.** A blend of hydroxy-functional polymers comprising:

(1) blends of linear polyester polyols, comprising first and second polyester polyols wherein each polyester polyol is the reaction product of a polyol and a polyacid, wherein

$$a + b \leqq 4, \text{ and } c + d \geqq 6$$
$$a + b > 4 \text{ and } \leqq 6, \text{ and } c + d \geqq 10$$
$$a + b > 6 \text{ and } \leqq 8, \text{ and } c + d \geqq 12$$
$$a + b > 8 \text{ and } \leqq 10, \text{ and } c + d \geqq 16$$

wherein a is the number of methylene moieties in the polyol used to form the first polyester polyol,
b is the number of methylene moieties in the polyacid used to form the first polyester polyol,
c is the number of methylene moieties in the polyol used to form the second polyester polyol,
d is the number of methylene moieties in the polyacid used to form the second polyester polyol; or

(2) a blend of at least one non-linear polyester polyol and one linear polyester polyol, wherein the non-linear polyester polyol is selected from the group consisting of polyneopentyl adipate, polypropylene adipate and polycyclohexanedimethyl adipate, and the linear polyester polyol is selected from the group consisting of polyethylene adipate, polybutylene succinate, polyhexamethylene sebacate, and polyhexamethylene dodecanedioate, provided that when the linear polyester polyol is polyhexamethylene sebacate or polyhexamethylene dodecanedioate, the non-linear polyester polyol is polyneopentyl adipate or polypropylene adipate; or

(3) a blend of poly-ε-caprolactone and at least one linear polyester polyol selected from the group consisting of polyethylene adipate, polyethylene succinate, polybutylene succinate, and polyhexamethylene dodecanedioate.

**2.** A mixture of isocyanate-terminated polyurethane prepolymers comprising:

(a) a first polyurethane prepolymer which comprises the reaction product of a first aliphatic, essentially crystalline polyester polyol and a polyisocyanate, said first polyester polyol being selected from the group consisting of poly-ε-caprolactone and the reaction product of a first diol with a first dicarboxylic acid wherein a = the number of methylene moieties in the first diol and b = the number of methylene moieties in the first diacid, selected such that a is an integer in the range of from 1 to 8, b is an integer in the range of from 2 to 9, and $a+b \leqq 10$; and

(b) a second polyurethane prepolymer which comprises the reaction product of a second aliphatic, essentially crystalline polyester polyol and a polyisocyanate, said second polyester polyol comprising the reaction product of a second diol and a second dicarboxylic acid selected such that $c+d \geqq 16$, wherein c = the number of methylene moieties in the second diol and d = the number of methylene moieties in the second diacid;

wherein said second prepolymer has a set time shorter than the set time of said first prepolymer.

**3.** A mixture according to claim 2 wherein d = 10.

**4.** A mixture according to claim 2 wherein c+d = 16.

**5.** A mixture according to claim 2 wherein said first diol is selected from the group consisting of ethylene

glycol, 1,4-butanediol, 1,5-pentanediol, 1,6-hexanediol, and 1,8-octanediol.

**6.** A mixture according to claim 5 wherein said first diacid is selected from the group consisting of succinic acid, glutaric acid, adipic acid, suberic acid, azelaic acid and sebacic acid.

**7.** A mixture according to claim 6 wherein said first diol is 1,6-hexanediol and said first diacid is adipic acid.

**8.** A mixture according to claim 2 said mixture comprising from about 99 to about 5 parts by weight of said first prepolymer and from about 0.1 to about 95 parts by weight of said second prepolymer.

**9.** A mixture according to claim 8 said mixture comprising at most about 15 parts by weight of said second prepolymer.

**10.** A mixture according to claim 2 wherein said mixture further comprises a third isocyanate-terminated polyurethane prepolymer, said third prepolymer comprising the reaction product of a third polyester polyol and a third polyisocyanate, wherein said third polyester polyol is different from said first polyester polyol, said second polyester polyol, and poly-ε-caprolactone.

**11.** A mixture of isocyanate-terminated polyurethane prepolymers comprising first and second polyurethane prepolymers, said first prepolymer comprising the reaction product of a first aliphatic, essentially crystalline polyester polyol and a polyisocyanate, said second prepolymer comprising the reaction product of a second aliphatic, essentially crystalline polyester polyol and a polyisocyanate wherein said first and second polyester polyols are selected from the group consisting of:

(1) linear polyester polyols wherein said first polyester polyol comprises the reaction product of a first diol and a first dicarboxylic acid and said second polyester polyol comprises the reaction product of a second diol and a second dicarboxylic acid selected such that

$$a + b \leqq 4, \text{ and } c + d \geqq 6$$
$$a + b > 4 \text{ and } \leqq 6, \text{ and } c + d \geqq 10$$
$$a + b > 6 \text{ and } \leqq 8, \text{ and } c + d \geqq 12$$
$$a + b > 8 \text{ and } \leqq 10, \text{ and } c + d \geqq 16$$

wherein a is the number of methylene moieties in the first diol, b is the number of methylene moieties in the first diacid, c is the number of methylene moieties in the second diol, and d is the number of methylene moieties in the second diacid;

(2) linear and non-linear polyester polyols wherein said first polyester polyol is non-linear and is selected from the group consisting of polyneopentyl adipate, polypropylene adipate and polycyclohexanedimethyl adipate, and said second polyester polyol is linear and is selected from the group consisting of polyethylene adipate, polybutylene succinate, polyhexamethylene sebacate, and polyhexamethylene 1,12-dodecanedioate, provided that when the second polyester polyol is polyhexamethylene sebacate or polyhexamethylene 1,12-dodecandeioate, the first polyester polyol is polyneopentyl adipate or polypropylene adipate; and

(3) said first polyester polyol is poly-ε-caprolactone and said second polyester polyol is selected from the group consisting of polyethylene adipate, polyethylene succinate, polybutylene succinate, and polyhexamethylene 1,12-dodecanedioate;

wherein said second prepolymer has a set time shorter than said first prepolymer.

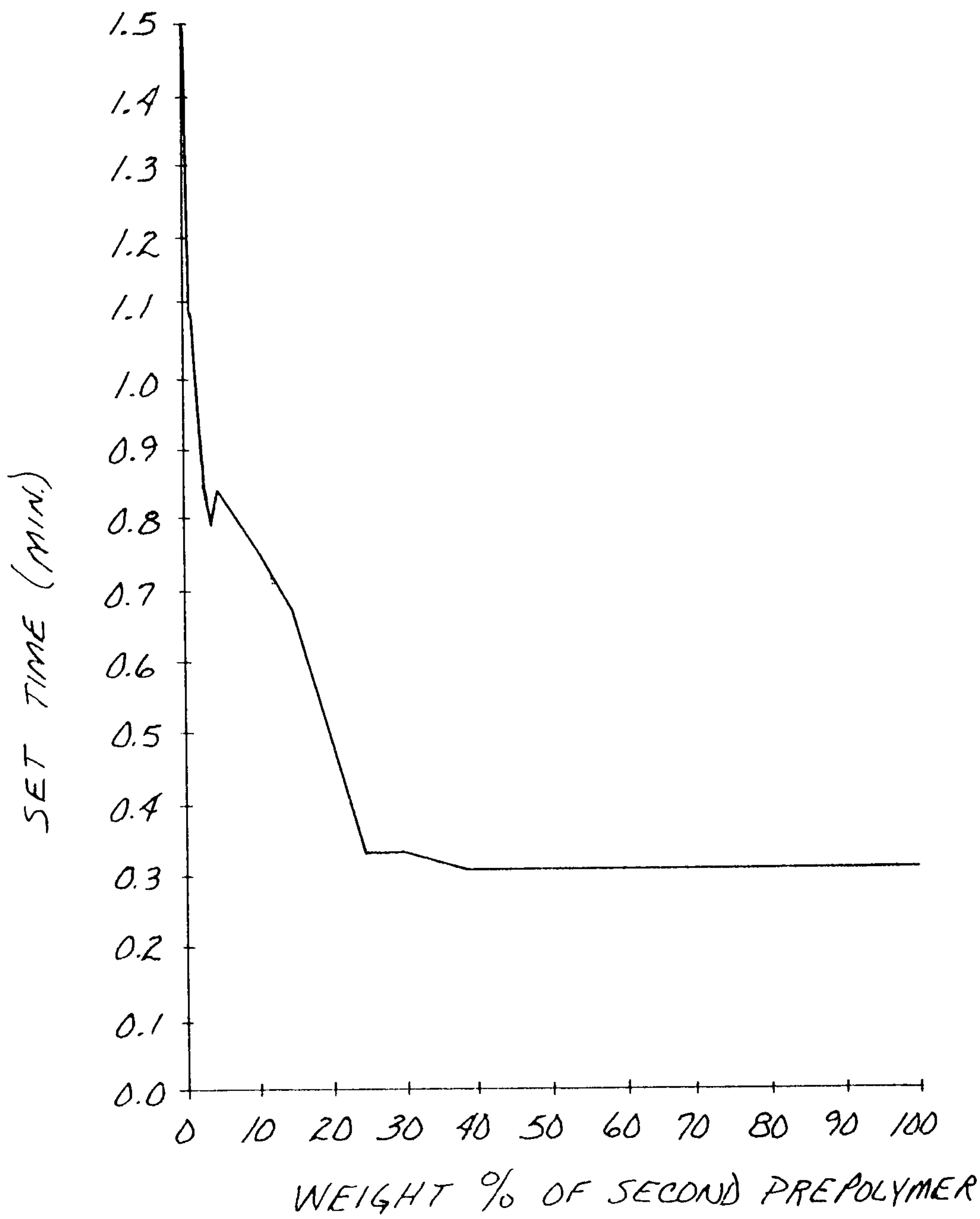
1.5
1.4
1.3
1.2
1.1
1.0
0.9
0.8
0.7
0.6
0.5
0.4
0.3
0.2
0.1
0.0
SET TIME (MIN.)
0
10
20
30
40
50
60
70
80
90
100
WEIGHT % OF SECOND PREPOLYMER

Fig. 1